# EUROPEAN PATENT APPLICATION

(11) **EP 1 936 463 A2**
(43) Date of publication of application: **25.06.2008**
(21) Application number: 07012253.6
(22) Date of filing: 22.06.2007
(51) Int. Cl.: G05D 1/02

(54) **Robot cleaner and control method thereof**

(30) Priority: 28.11.2006 KR 20060118431
(71) Applicant: Samsung Gwangju Electronics Co., Ltd., Gwangju-city (KR)
(72) Inventor: Ko, Jang-youn, Gwangju-city (KR); Jeung, Sam-jong, Gwangju-city (KR); Song, Jeong-gon, Gwangju-city (KR); Kim, Myeong-cho, Gwangju-city (KR); Lee, Ju-sang, Gwangju-city (KR); Kim, Kyoung-woung, Gwangju-city (KR); Lee, Hak-bong, Jeollanam-do (KR)
(74) Representative: Käck, Jürgen

(57) **Abstract**

A control method of a robot cleaner includes: driving a driving part to rotate (S103) a cleaner main body when a obstacle sensor detects (S102) an obstacle, measuring (S104) a rotation angle of the cleaner main body in real-time, and comparing (S105) the measured total rotation angle with a predetermined reference rotation angle so as to determine that the obstacle sensor is broke down when the total rotation angle is more than the reference rotation angle and thus to stop (S106) the driving part. With this method, the robot cleaner can make the diagnosis of the breakdown to the obstacle sensor by itself to stop a driving thereof, and inform (S107) a user of the breakdown diagnosis to the obstacle sensor.

## Description

### FIELD OF THE INVENTION

The present invention relates generally to a robot cleaner and a control method thereof.

### BACKGROUND OF THE INVENTION

In general, a robot cleaner draws in foreign substance, such as dust, dirt, or the like, from a bottom surface while traveling around by itself without a manipulation of user within an area to be cleaned, and thus automatically cleans the area to be cleaned.

The robot cleaner as described above has various kinds of sensors, particularly, an obstacle sensor, mounted therein. The obstacle sensor is a necessary sensor in avoiding an obstacle located in a proceeding direction of the robot cleaner when the robot cleaner travels.

However, if a protective window for the obstacle sensor is contaminated with foreign substance or the obstacle sensor is maintained in a detected state, that is, an ON state, due to its own breakdown, the robot cleaner senses the front of the obstacle sensor as an obstacle region, so that it rotates to avoid the sensed region. At this time, if the obstacle sensor is continuously operated with the breakdown thereof being not fixed, a problem occurs, in that the robot cleaner repeats rotating until the electric power supply is cut thereto.

### SUMMARY OF THE INVENTION

An aspect of the present invention is to solve at least the above problems and/or disadvantages and to provide at least the advantages described below. Accordingly, an aspect of the present invention is to provide a robot cleaner and a control method thereof, capable of making a diagnosis of a breakdown to an obstacle sensor by itself to stop a driving thereof and informing a user of the breakdown diagnosis to the obstacle sensor.

In order to achieve the above-described aspects of the present invention, there is provided a robot cleaner including an obstacle sensor to detect an obstacle to a proceeding direction of a cleaner main body, a rotation angle sensor to measure a rotation angle of the cleaner main body in real-time, a driving part to travel the cleaner main body, and a controller to drive the driving part to rotate the cleaner main body when the obstacle sensor detects the obstacle, and to compare the total rotation angle measured by the rotation angle sensor with a predetermined reference rotation angle so as to stop the driving part when the total rotation angle is more than the reference rotation angle.

The controller may determine that the obstacle sensor is broke down when the total rotation angle is more than the reference rotation angle.

According to another aspect of the present invention, the robot cleaner further include at least one of a sound unit and a display unit in order to inform a user of the breakdown diagnosis to the obstacle sensor.

The reference rotation angle may be set by a direct input of a numerical value into the controller by a user.

Preferably, but not necessarily, the reference rotation angle include an angle of at least 360°.

According to yet another aspect of the present invention, there is provided a control method of a robot cleaner, including: driving a driving part to rotate a cleaner main body when an obstacle sensor detects an obstacle, measuring a rotation angle of the cleaner main body in real-time, and comparing the measured total rotation angle with a predetermined reference rotation angle so as to determine that the obstacle sensor is broke down when the total rotation angle is more than the reference rotation angle and thus to stop the driving part.

The control method may further include: informing a user of the breakdown diagnosis to the obstacle sensor after stopping the driving part.

### BRIEF DESCRIPTION OF THE DRAWING FIGURES

The above aspect and other features of the present invention will become more apparent by describing in detail exemplary embodiments thereof with reference to the attached drawing figures, wherein;

FIG. 1 is a perspective view of a robot cleaner according to an exemplary embodiment of the present invention;

FIG. 2 is a block diagram exemplifying a construction of the robot cleaner according to the exemplary embodiment of the present invention; and

FIG. 3 is a flow chart exemplifying a control method of the robot cleaner according to the exemplary embodiment of the present invention.

Throughout the drawings, the same reference numerals will be understood to refer to the same elements, features, and structures.

### DETAILED DESCRIPTION OF THE EXEMPLARY EMBODIMENTS

Hereinafter, a robot cleaner and a control method thereof according to exemplary embodiments of the present invention will be described in detail with reference to the accompanying drawing figures.

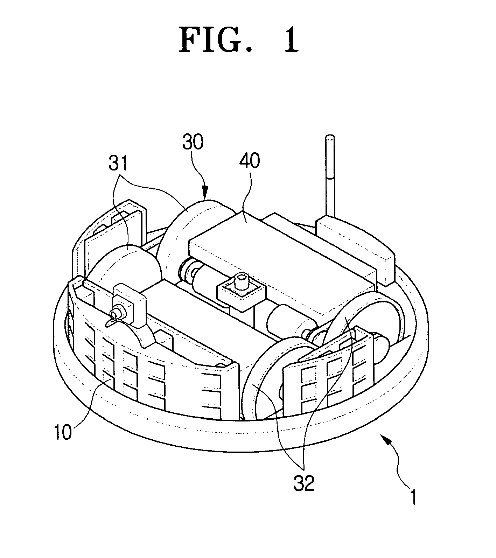

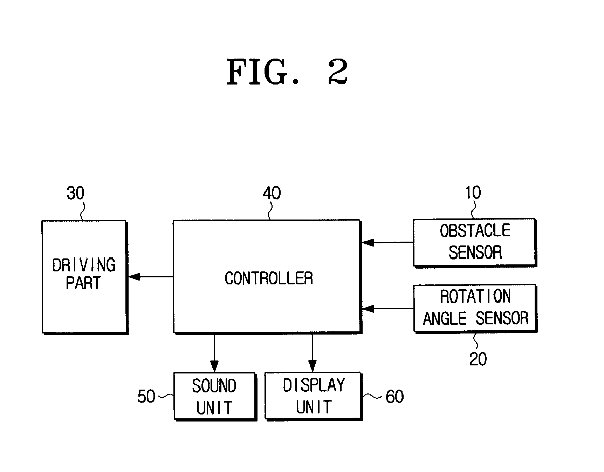

FIG. 1 is a perspective view of a robot cleaner according to an exemplary embodiment of the present invention, and FIG. 2 is a block diagram exemplifying a construction of the robot cleaner according to the exemplary embodiment of the present invention.

As illustrated in FIGS. 1 and 2, the robot cleaner according to the exemplary embodiment of the present invention is provided with a cleaner main body 1, an obstacle sensor 10, a rotation angle sensor 20, a driving part 30, and a controller 40.

The cleaner main body 1 is formed in an approximately disc shape, and at an upper part thereof has a semicircle-shaped cover (not illustrated). In the cleaner main body 1 is installed a dust collecting part (not illustrated), which collects dust or dirt from a surface to be cleaned.

The obstacle sensor 10 is installed in a front surface of the cleaner main body 1 to face a proceeding direction of the cleaner main body 1, and is connected with the controller 40 to output a detecting signal to the controller 40 after detecting an obstacle located in front of the cleaner main body 1. The obstacle sensor 10 includes a light emitting part (not illustrated) to emit infrared light through a translucent window (not illustrated) installed on the front surface of the cleaner main body 1, and a light receiving part (not illustrated) to receive the infrared light reflected from the obstacle after it is emitted from the light emitting part.

The rotation angle sensor 20 is installed in the front surface of the cleaner main body 1 to measure a rotation angle of the cleaner main body 1 in real-time, and is connected with the controller 40 to output the measured rotation angle to the controller 40. The rotation angle sensor 20 as a kind of angular acceleration sensor includes, for example, a gyroscope sensor.

The driving part 30 includes a plurality of wheels 31 and 32 installed on both sides of the cleaner main body 1 to move straight or rotate the cleaner main body 1.

To avoid an obstacle when the obstacle sensor 10 detects the obstacle, the controller 40 drives the driving part 30 to rotate the cleaner main body 1. Also, the controller 40 compares the total rotation angle measured by the rotation angle sensor 20 with a predetermined reference rotation angle so as to determine that the obstacle sensor 10 is broke down when the total rotation angle is more than the reference rotation angle and thus stop the driving part 30. The reference rotation angle can be set in the controller 40 in advance during fabrication, or set by a direct input of a numerical value into the controller 40 through an outer operating button (not illustrated) by a user. Preferably, but not necessarily, the reference rotation angle is set as an angle of at least 360°, particularly, an angle of at least 540°.

According to another exemplary embodiment of the present invention, to inform the user of the breakdown diagnosis to the obstacle sensor 10, the robot cleaner further includes at least one of a sound unit 50 and a display unit 60, which is connected to the controller 40. For example, the sound unit 50 may be a general speaker, and the display unit 60 may be a general liquid crystal display (LCD) monitor.

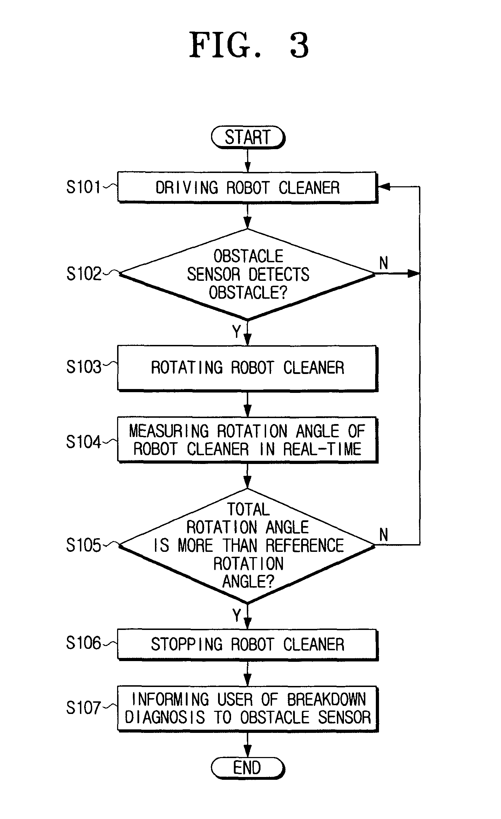

Hereinafter, a control method of the robot cleaner according to the exemplary embodiments of the present invention as constructed as described above will now be described with reference to FIG. 3. As illustrated in FIG. 3, while the robot cleaner travels (S101), if the obstacle sensor 10 detects an obstacle (S102), the controller 40 drives the driving part 30, so that the cleaner main body 1 rotates to avoid the obstacle (S103). At this time, the rotation angle sensor 20 measures a rotation angle of the cleaner main body 1 in real-time, and outputs the measured rotation angle to the controller 40 (5104). The controller 40 compares the total rotation angle measured by the rotation angle sensor 20 with the reference rotation angle, and if the total rotation angle is more than the reference rotation angle (S105), determines that the obstacle sensor is bloke down, thus to stop a driving of the robot cleaner (S106). And the controller 40 informs the user of the breakdown diagnosis to the obstacle sensor 10 through the sound unit 50 or/and the display unit 60 (S 107).

As apparent from the foregoing description, according to the exemplary embodiments of the present invention, the robot cleaner and the control method thereof can make the diagnosis of the breakdown to the obstacle sensor by itself to stop the driving thereof, and inform the user of the breakdown diagnosis to the obstacle sensor.

Although representative exemplary embodiments of the present invention have been shown and described in order to exemplify the principle of the present invention, the present invention is not limited to the specific exemplary embodiments. It will be understood that various modifications and changes can be made by one skilled in the art without departing from the spirit and scope of the invention as defined by the appended claims. Therefore, it shall be considered that such modifications, changes and equivalents thereof are all included within the scope of the present invention.

## Claims

1. A robot cleaner comprising:
an obstacle sensor (10) adapted to detect an obstacle to a proceeding direction of a cleaner main body (1);
a rotation angle sensor (20) adapted to measure a rotation angle of the cleaner main body (1) in real-time;
a driving part (30) adapted to travel the cleaner main body (1); and
a controller (40) adapted to drive the driving part (30) to rotate the cleaner main body (1) when the obstacle sensor (10) detects the obstacle, and adapted to compare the total rotation angle measured by the rotation angle sensor (20) with a predetermined reference rotation angle so as to stop the driving part (30) when the total rotation angle is more than the reference rotation angle.

2. The robot cleaner of claim 1, wherein the controller (40) determines that the obstacle sensor (10) is broken down when the total rotation angle is more than the reference rotation angle.

3. The robot cleaner of claim 1 or 2, further comprising at least one of a sound unit (50) and a display unit (60) in order to inform a user of the breakdown diagnosis to the obstacle sensor (10).

4. The robot cleaner of any of claims 1 to 3, wherein the reference rotation angle is set by a direct input of a numerical value into the controller (40) by a user.

5. The robot cleaner of any of claims 1 to 4, wherein the reference rotation angle comprises an angle of at least 360°.

6. A control method of a robot cleaner (1), comprising:
driving a driving part (30) to rotate a cleaner main body (1) when an obstacle sensor (10) detects an obstacle;
measuring a rotation angle of the cleaner main body (1) in real-time; and
comparing the measured total rotation angle with a predetermined reference rotation angle so as to determine that the obstacle sensor (10) is broken down when the total rotation angle is more than the reference rotation angle and thus to stop the driving part (10).

7. The control method of claim 6, further comprising:
informing a user of the breakdown diagnosis to the obstacle sensor (10) after stopping the driving part (30).

8. The control method of claim 6 or 7, wherein the reference rotation angle comprises an angle of at least 360°.
